# FASCICULE DE BREVET EUROPEEN

(11) **EP 0 230 390 B1**
(45) Date de publication et mention de la délivrance du brevet: **12.05.1993**
(21) Numéro de dépôt: 87400077.1
(22) Date de dépôt: 14.01.1987
(51) Int. Cl.: A21B 2/00

(54) **Convertisseur intégré dans l'enveloppe d'un aliment, pour cuisson ou rechauffement dans un four à micro-ondes**
Mit der Verpackung eines Nahrungsmittels integrierter Umformer zum Kochen oder Wiedererwärmen in Mikrowellenöfen
Converter integrated in the packaging of a food stuff for cooking or reheating in a microwave oven

(30) Priorité: 14.01.1986 FR 8600472
(43) Date de publication de la demande: 29.07.1987
(73) Titulaire: Mayer, Ferdy, F-75015 Paris (FR)
(72) Inventeur: Mayer, Ferdy, F-75015 Paris (FR)
(74) Mandataire: Pinguet, André

(56) Documents cités:
- FR-A- 2 367 003
- FR-A- 2 451 182
- US-A- 4 230 924
- US-A- 4 266 108
- US-A- 4 267 420
- US-A- 4 283 427
- US-A- 4 518 651
- US-A- 4 555 605

## Description

Aujourd'hui les producteurs pour fours à micro-ondes considèrent résolu le problème de la préparation rapide de repas à domicile, ou encore de mets préemballés, réchauffés lors d'une distribution : l'échauffement par l'intérieur, dans la masse, est caractéristique du chauffage par micro-ondes.

Un problème non résolu reste celui de la "croustillance" et celui du brunissage externe de la matière comestible, pour obtenir par exemple, une pâtisserie croustillante chaude à partir d'une pâte non cuite, précuite ou congelée, ou simplement pour réchauffer un mets précuit, ou encore pour obtenir une croûte sur une viande, une volaille, etc, lors d'une cuisson au four micro-ondes.

En effet, les efforts pour obtenir la dynamique thermique d'un four classique (échauffement par l'extérieur combiné avec la dynamique du four micro-onde , échauffement dans la masse) n'ont pas, à ce jour, abouti de façon satisfaisante.

Afin de résoudre ce problème, on a réalisé des four micro-ondes comportant un chauffage infrarouge électrique additionnel : outre la complexité de cette combinaison, cette solution est inapplicable à des mets préemballés. Des fours à micro-ondes de ce type sont divulgués dans les documents US-4,266,108 et US-4,230,924.

On a encore réalisé des assiettes et des plats incorporant des matériaux métalliques résistifs (en surface) ou encore des matériaux absorbant les micro-ondes (en surface ou dans la masse, par exemple ferrites et matériaux ferroélectriques, brevet US 2.830.162 et 3.773.669) afin de convertir une partie de l'énergie micro-onde en énergie thermique : ces ustensiles, du fait de leur rigidité, posent des problèmes de tenue mécanique (sous les cycles thermiques partant des températures de congélation jusqu'aux températures élevées permettant l'obtention des effets de "brunissage"), et les effets sont lents. Par ailleurs, du fait de leur conception même, ils sont inutilisables pour emballer des mets, et d'une façon générale, pour une utilisation où une surface flexible et pratiquement incassable est indispensable.

Finalement, sont apparus récemment sur le marché de l'emballage, des convertisseurs dénommés "susceptors" (commercialisés par la Société PILLSBURY aux U.S.A. et la Société ALCAN PACKAGED FOIL and CONTAINERS Ltd au Canada) pour apporter davantage de chaleur à la surface du mets : dans ce but, une couche mince conductrice (par exemple poudre d'Aluminium, ou des bandes de clinquant métallique) est laminée sous un film plastique (thermoplastique ou thermodurcissable) ou collée sur un film plastique pour servir telle quelle, sous forme de sous-plat chauffant, ou encore collée au fond d'un conteneur jetable, contenant le mets à chauffer.

Analogues aux couches résistives (rigides) citées, ces solutions peuvent être optimisées si on donne aux bandes ou filtres éventuellement les dimensions d'une demi-onde (pour la fréquence du four, telle que 2,45 GHz). Comme elles sont basées sur un couplage aux champs électriques du four, elles nécessitent d'être placées à l'écart des parois du four (où le champ magnétique est maximum) ; comme elles perturbent par ailleurs ces champs, des points chauds et froids apparaissent (et donc une cuisson irrégulière), obligeant les préparateurs des mets de limiter les dimensions d'une tarte ou d'une pizza.

Un des buts de la présente invention est de décrire une surface obtenue par un procédé de fabrication du type de celui du papier, du plastique ou de l'élastomère ( laminage, extrusion, injection), résistante à haute température à la fois aux contraintes thermiques et mécaniques répétées réalisant une conversion locale de l'énergie micro-ondes en énergie thermique.

Un autre but de l'invention est de décrire un convertisseur dont la surface de conversion soit accordée et éventuellement intégrable avec les performances mécaniques, chimiques etc... d'un substrat ou emballage, pour réaliser une étanchéité à l'eau ou à l'oxygène, une stérilisation éventuelle, la transparence à d'autres gaz etc.

Un autre but est de décrire un convertisseur basé sur des effets de conversion électrique et magnétique combinés (c'est-à-dire utilisant des pertes électriques et pertes magnétiques), dont l'effet global (c'est-à-dire la régularité de chauffage) soit insensible à la nature du champ micro-onde, et donc insensible à la position dans le four.

Un autre but est de décrire un convertisseur dans lequel l'effet de conversion ne soit pas obtenu par une conductivité électrique métallique, c'est-à-dire où les micro-ondes puissent traverser ladite surface; ce qui permet, selon l'épaisseur de cette surface (pour des pertes données) de doser l'effet thermique extérieur (le mets étant chauffé de l'extérieur vers l'intérieur ) par rapport à l'effet d'échauffement interne, par micro-ondes).

Un autre but est de décrire un convertisseur absorbant les micro-ondes à cause de pertes électriques et magnétiques élevées (éventuellement optimisées à la fréquence du four) de façon à avoir un effet de chauffe maximum, pour un minimum de matériau convertisseur, et à rendre possible la réalisation d'une solution économique, compatible avec des marchés de grande consommation ( solution permettant par exemple, l'incorporation d'un tel convertisseur dans un emballage jetable, ou la réalisation d'un emballage entier jetable.)

Un dernier but, enfin est de décrire un convertisseur où les pertes électriques et magnétiques soient liées à la température, où l'on puisse faire apparaître la caractéristique souhaitable, c'est-à-dire limiter dans un premier temps la température maximum du brunissage ou de la croustillance (autoprotection du convertisseur à vide) et ensuite, éventuellement, arrêter carrément l'effet du chauffage thermique, afin de diminuer l'effet désastreux d'un faux timing.

La présente invention a pour objet un convertisseur, transformant une puissance micro-onde en effet thermique, pour communiquer un apport de chaleur extérieur à des aliments à décongeler et/ou à réchauffer, apport additionnel à la chaleur interne engendrée par les champs micro-ondes, ledit convertisseur enveloppant, au moins partiellement lesdits aliments, caractérisé en ce que ledit convertisseur comporte des matériaux magnétiques peu conducteurs de l'électricité, présentant de fortes pertes magnétiques et/ou diélectriques.

Dans la description qui va suivre, seront détaillées trois réalisations types de ce convertisseur d'énergie micro-onde en énergie thermique : dans ces exemples seront considérées des combinaisons volontairement variées de matériaux absorbants, de matériaux support ou matrice, et de géométrie de réalisation, à partir desquelles, par permutation, un grand nombre d'autres réalisations pratiques peut être déduit immédiatement.

Dans l'ensemble de ces réalisations, il y a un point commun : les matériaux convertissant les champs micro-ondes en chaleur sont magnétiques et peu conducteurs tout en présentant des pertes diélectriques également : les matériaux de choix sont les matériaux ferrimagnétiques, de formule générale MO (Fe₂ O₃) où M représente un métal bivalent, tel que le Fe, Ni, Cu, Zn, Mn, Mg ; ceux-ci, ainsi que d'autres matériaux analogues, ont été décrits en détail dans le brevet France n° 78 333 85. (D'autres matériaux seront décrits ci-dessous).

Ces matériaux sont mis en forme granulaire, suffisamment fine, avec par exemple une granulométrie égale et inférieure à 200 µ, et plus particulièrement dans le cas de l'incorporation dans un matériau matrice, égal et inférieur à 50 µ ; en effet, à la fréquence de travail de 2,45 GHz, ce sont essentiellement les effets de résonance des spins qui contribuent aux pertes magnétiques considérées, les pertes diélectriques étant obtenues par la structure granulaire des matériaux. Ces grains sont ensuite incorporés ou adjoints à des substrats divers, décrits en détail ci-dessous.

Ainsi, une des caractéristiques de l'invention consiste dans l'utilisation de poudres divisées, permettant d'obtenir, en combinaison avec le milieu matrice ou les entrefers d'air, des impédances d'onde relativement élevées nécessaires (peu de perturbations des champs dans la cavité du four), ainsi qu'une conductivité réduite, éliminant les effets néfastes de la conductibilité métallique, (citée plus haut), faisant écran à l'effet de chauffage par micro-onde proprement dit, pénétrant dans la masse du mets.

Dans une première réalisation, on décrira plus en détail un emballage pour "repas-télévision", réalisé en résine polyester cristallisable (CPET). On sait que de telles résines sont thermoformées (en moule), pour donner des conteneurs thermodurcissables : un agent de nucléation donnant, au formage, la cristallisation nécessaire à la résistance à la température élevée nécessaire (- 40 ° C à 250 ° C par exemple ) (Eastman Chemical, Goodyear Chemical, ICI, etc...).

(Un autre choix serait dans les résines polypropylènes (Himont, Dupont Nemours, etc..) chargées d'oxydes genre talc, ou encore des colaminées ou coextrudées incluant des couches de liaison adhésives et des barrières d'oxygène, tel que l'éthyl-vinyl alcohol (EVOM) et le polyvinylidène chlorid (PVDC)).

L'ensemble de ces matériaux peut être chargé des matériaux magnétiques absorbants mentionnés plus haut, pour au moins une partie de container, telle que par exemple le fond pour des tartes, pizzas, etc... Typiquement, une charge de 10 à 90 % en poids de ferrite de Mn - Zn à perméabilité moyenne et à forte aimantation est utilisée, ce ferrite ayant une température de Curie de 250° C (la charge forte étant pour une faible épaisseur du matériau : la ou les parois entourant la nourriture chauffant très rapidement par la conversion d'énergie mentionnée échauffent ladite nourriture par conduction et/ou rayonnement des convertisseurs vers la matière comestible. Dès l'obtention de 250° C dans le convertisseur, les perméabilités et les pertes magnétiques diminuent brusquement, la température se stabilise à cette valeur, obtenant ainsi l'effet d'autorégulation mentionné.

Par ailleurs, du fait de la pénétration des ondes dans cette matière, l'effet classique de décongélation/réchauffement est également assuré.

Dans une deuxième réalisation,on considère un coextrudé/colaminé, réalisé en continu : entre deux rubans minces de papier du type sulfurisé (résistant à 350° C), un mince dépôt de ferrite en grains du type Mn - Zn - Mg ou encore Ni - Zn riche en Zinc ( avec une température de Curie de 350° C par exemple) est déposé et immobilisé par un primaire d'adhérence, assurant également le collage des deux rubans, sous la pression de l'opération du processing.

Ensuite par découpage sous presse, des plats carrés ou des ronds peuvent être découpés ;une telle réalisation se prête facilement à une utilisation répétée par l'utilisateur du four micro-onde, comme "dessous de plat" supportant le mets à brunir, ou encore la pâtisserie à rendre croustillante.

Dans une troisème réalisation, très économique, et réalisable en grande quantité, on inclut les grains des matériaux magnétiques dans la matrice d'une pâte à papier ou carton, pendant le processus de production de papier ou carton : de telles techniques de charges, avec la création des liaisons multivalentes assurant la cohésion, sont bien connues dans la production papetière.

Une charge de quelques dixièmes de grammes à quelques grammes de poudre magnétique par décimètre carré de papier constitue la gamme préférée d'une telle réalisation. Le matériau magnétique, pour cette charge, pourra être un ferrite de Mn - Zn à forte perméabilité, avec des additions de Ti, Si, etc, lui conférant une résistivité relativement élevée, afin d'obtenir une impédance d'onde élevée (rapport perméabilité divisée par permittivité), s'approchant, autant que faire se peut, de celle du vide, c'est-à dire de celle de la cavité du four.

Le matériau magnétique, dans cet exemple, pourra être constitué également, au moins partiellement, de matière à hystérisis du point Curie. (De tels matériaux sont connus sous le nom de matériaux à effet Swoboda). Le convertisseur, selon ces règles, chauffe à la température de Curie, choisie entre 200 et 400 °, selon les besoins en effet "brunisseur"; ensuite, les pertes magnétiques provoquant cet effet disparaissent, pour ne réapparaître qu'à une température plus basse : on peut réaliser de la sorte un effet "brunisseur" dosé automatiquement, évitant de brûler le mets, même dans le cas d'une surexposition.

On connait, en effet, la sensibilité de certains produits (par exemple pâtes feuilletées à une surexposition : Prolonger l'effet de quelques 10 à 15 secondes peut donner la différence entre le délectable et le désastreux.

Finalement, dans tous ces exemples, des mélanges de ferrites, à température de Curie échelonnée, peuvent être utilisés, avec seulement partiellement une température de Curie égale à la température maximum que l'on veut atteindre par le convertisseur. De cette façon la montée en température vers cette température maximum se fait avec un gradient ralenti, ce qui a pour effet une projection additionnelle contre le dépassement de la température maximum, c'est-à-dire contre le danger de destruction du convertisseur, soit qu'il ne soit pas rempli (par le mets à brunir) soit que l'utilisateur dépasse les temps de chauffage normaux.

## Revendications

1. Convertisseur, transformant une puissance micro-onde en effet thermique, pour communiquer un apport de chaleur extérieur à des aliments à décongeler et/ou à réchauffer, apport additionnel à la chaleur interne engendrée par les champs micro-ondes, ledit convertisseur enveloppant, au moins partiellement lesdits aliments, caractérisé en ce que ledit convertisseur comporte des matériaux magnétiques peu conducteurs de l'électricité présentant de fortes pertes magnétiques et/ou diélectriques.

2. Convertisseur selon la revendication 1, caractérisé en ce que dans les matériaux à pertes magnétiques et/ou diélectriques, pour des températures comprises entre 200 et 400°C, les effets de pertes diminuent fortement ou disparaissent, réalisant de la sorte une température de conversion maximum atteinte graduellement et autoprotégeant le convertisseur.

3. Convertisseur selon une des revendications précédentes, caractérisé en ce que les matériaux à pertes sont sélectionnés pour présenter, in situ, une impédance d'onde relativement élevée, permettent aux champs micro-onde de les traverser au moins partiellement, et ainsi d'assurer l'échauffement normal.

4. Convertisseur selon une des revendications précédentes, caractérisé en ce que la concentration des matériaux à pertes, liée au degré d'enveloppement des aliments, permet le dosage relatif précis de la chaleur micro-onde interne dans l'aliment et de la chaleur thermique apportée de l'extérieur à la surface de l'aliment.

5. Convertisseur selon une des revendications précédentes, caractérisé en ce que les matériaux à pertes sont appliqués sur au moins une partie des surfaces (sous forme de vernis chargé, spray, colaminé, etc...) d'une enveloppe ou d'un contanier en papier, carton, matière thermoplastique et/ou thermodurcissable.

6. Convertisseur selon une des revendications 1 à 4, caractérisé en ce que les matériaux à pertes sont incorporés dans la masse d'une partie d'une enveloppe ou d'un container en papier, carton, matière thermoplastique et/ou thermodurcissable.

7. Convertisseur selon une des revendications précédentes, caractérisé en ce qu'il est utilisé sous forme de bandes, de plaques ou de rondelles, servant de sous-plat brunisseur.

## Claims

1. A converter transforming a microwave power into a thermal effect in order to transmit a supply of external heat to foodstuffs to be defrosted and/or reheated, this supply being in addition to the internal heat generated by the microwave fields, said converter providing at least a partial wrapper for said foodstuffs, characterised in that said converter comprises magnetic materials which are poor conductors of electricity, having high magnetic and/or dielectric losses.

2. A converter according to Claim 1, characterised in that in the materials with magnetic and/or dielectric losses, for temperatures between 200 and 400°C, the loss effects diminish greatly or disappear, thus producing a maximum conversion temperature reached gradually and providing self-shielding for the converter.

3. A converter according to one of the preceding claims, characterised in that the materials with losses are selected so as to have, in situ, a relatively high wave impedance, allowing the microwave fields to pass through them at least partially, and thus provide normal heating.

4. A converter according to one of the preceding claims, characterised in that the concentration of the materials with losses, connected with the degree to which the foodstuffs are wrapped, permits the accurate relative apportioning of the internal microwave heat within the foodstuff and of the thermal heat supplied from outside to the surface of the foodstuff.

5. A converter according to one of the preceding claims, characterised in that the materials with losses are applied to at least part of the surfaces (in the form of loaded varnish, spray, co-laminate, etc.) of a wrapper or a container made of paper, card, thermoplastic and/or thermosetting material.

6. A converter according to one of Claims 1 to 4, characterised in that the materials with losses are incorporated into the mass of part of a wrapper or a container made of paper, card, thermoplastic and/or thermosetting material.

7. A converter according to one of the preceding claims, characterised in that it is used in the form of strips, plates or discs, serving as a browning tray.

## Patentansprüche

1. Umformer, der eine Mikrowellenleistung in eine Wärmewirkung umwandelt, um eine äußere Wärmezufuhr auf aufzutauende und/oder aufzuwärmende Lebensmittel zu übertragen, die eine zusätzliche Zufuhr zur von den Mikrowellenfeldern erzeugten inneren Wärme bildet, wobei der Umformer die Lebensmittel mindestens teilweise umhüllt, dadurch gekennzeichnet, daß der Umformer wenig elektrizitätsleitende magnetische Materialien enthält, die starke magnetische und/oder dielektrische Verluste aufweisen.

2. Umformer nach Anspruch 1, dadurch gekennzeichnet, daß in den Materialien mit magnetischen und/oder dielektrischen Verlusten die Verlustwirkungen bei Temperaturen zwischen 200 und 400°C stark abnehmen oder verschwinden und so eine maximale Umformungstemperatur erzeugen, die allmählich erreicht wird und eine Selbstabschirmung des Umformers bewirkt.

3. Umformer nach einem der vorhergehenden Ansprüche, dadurch gekennzeichnet, daß die Verlustmaterialien so ausgewählt sind, daß sie in situ einen relativ hohen Feldwiderstand aufweisen, was es den Mikrowellenfelder erlaubt, sie zumindest teilweise zu durchqueren, und so die normale Erwärmung zu bewirken.

4. Umformer nach einem der vorhergehenden Ansprüche, dadurch gekennzeichnet, daß die Konzentration der Verlustmaterialien, verbunden mit dem Grad der Umhüllung der Lebensmittel, die präzise relative Dosierung der Mikrowellenwärme im Inneren des Lebensmittels und der von außen auf die Oberfläche des Lebensmittels aufgebrachten thermischen Wärme erlaubt.

5. Umformer nach einem der vorhergehenden Ansprüche, dadurch gekennzeichnet, daß die Verlustmaterialien auf mindestens einen Teil der Oberflächen (in Form von angereichertem Lack, Spray, aufgewalzt, usw...) einer Hülle oder eines Containers aus Papier, Karton, thermoplastischem und/oder wärmehärtbaren Material aufgebracht sind.

6. Umformer nach einem der Ansprüche 1 bis 4, dadurch gekennzeichnet, daß die Verlustmaterialien der Masse eines Teils einer Hülle oder eines Containers aus Papier, Karton, thermoplastischem und/oder wärmehärtbaren Material beigemengt sind.

7. Umformer nach einem der vorhergehenden Ansprüche, dadurch gekennzeichnet, daß er in Form von Bändern, Platten oder Scheiben verwendet wird, die als Bräunungsplatte dienen.
